# EUROPEAN PATENT SPECIFICATION

(11) **EP 1 926 988 B1**
(45) Date of publication and mention of the grant of the patent: **30.07.2014**
(21) Application number: 06765237.0
(22) Date of filing: 08.08.2006
(51) Int. Cl.: G01N 27/333, G01N 27/49, E21B 49/08, G01N 27/48, E21B 47/01

(54) **ELECTRO-CHEMICAL pH SENSOR**
ELEKTROCHEMISCHER pH-SENSOR
CAPTEUR ÉLECTROCHIMIQUE DE pH

(30) Priority: 21.09.2005 GB 0519219
(43) Date of publication of application: 04.06.2008
(73) Proprietor: Schlumberger Technology B.V., 2514 JG The Hague (NL); Schlumberger Holdings Limited, Road Town, Tortola (VG); Services Pétroliers Schlumberger, 75007 Paris (FR); PRAD Research and Development N.V., Willemstad, Curacao (AN)
(72) Inventor: LAWRENCE, Nathan, Cambridgeshire, PE19 2JT (GB); ROBINSON, Kay, Cambridgeshire CB24 6AH (GB); JIANG, Li, Newton, MA 02465 (US); PAGELS, Markus, Cambridgeshire CB21 4XF (GB); HACKETT, Simon, St. Saviourgate York North Yorkshire YO1 8NQ (GB)
(74) Representative: Ford, Michael Frederick
(86) International application number: PCT/GB2006/002935
(87) International publication number: WO 2007/034131

(56) References cited:
- EP-A- 0 411 127
- WO-A-2005/066618
- US-A- 4 758 325
- US-A- 5 770 453
- US-A1- 2003 206 026

## Description

The invention relates to polymers and electro-chemical sensors for analyzing of fluids, particularly for use in downhole apparatus and methods to analyze fluids produced from subterranean formations. More specifically it relates to an electro-chemical pH sensor .

### BACKGROUND OF THE INVENTION

Analyzing samples representative of downhole fluids is an important aspect of determining the quality and economic value of a hydrocarbon formation.

Present day operations obtain an analysis of downhole fluids usually through wireline logging using a formation tester such as the MDT ™ tool of Schlumberger™ Oilfield Services. However, more recently, it was suggested to analyze downhole fluids either through sensors permanently or quasi-permanently installed in a wellbore or through sensor mounted on the drillstring. The latter method, if successfully implemented, has the advantage of obtaining data while drilling, whereas the former installation could be part of a control system for wellbores and hydrocarbon production therefrom.

To obtain an estimate of the composition of downhole fluids, the MDT tool uses an optical probe to estimate the amount of hydrocarbons in the samples collected from the formation. Other sensors use resistivity measurements to discern various components of the formations fluids.

Particularly, knowledge of downhole formation (produced) water chemistry is needed to save costs and increase production at all stages of oil and gas exploration and production. Knowledge of particularly the water chemistry is important for a number of key processes of hydrocarbon production, including:
- Prediction and assessment of mineral scale and corrosion;
- Strategy for oil/water separation and water re-injection;
- Understanding of reservoir compartmentalization / flow units;
- Characterization of water break-through;
- Derivation of the water cut R_{w} ;and
- Evaluation of downhole H₂S partition in the oil and or water (if used for H₂S measurements).

Some chemical species dissolved in water (like, for example, Cl⁻ and Na⁺) do not change their concentration when moved to the surface either as a part of a flow through a well, or as a sample taken downhole. Consequently information about their quantities may be obtained from downhole samples and in some cases surface samples of a flow. However, the state of chemical species, such as H⁺ (pH = -log[concentration of H⁺]), CO₂, or H₂S may change significantly while tripping to the surface. The change occurs mainly due to a difference in temperature and pressure between downhole and surface environment. In case of sampling, this change may also happen due to degassing of a sample (seal failure), mineral precipitation in a sampling bottle, and (especially in case of H₂S) - a chemical reaction with the sampling chamber. It should be stressed that pH, H₂S, or CO₂ are among the most critical parameters for corrosion and scale assessment. Consequently it is of considerable importance to have their downhole values precisely known.

The determination of the pH of a solution is one of the most common analytical measurements. Nearly all water samples will have their pH tested at some point in their life cycle as many chemical processes are based on pH. The concentration of protons or its logarithm pH can be regarded as the most critical parameter in water chemistry. It determines the rate of many important chemical reactions as well as the solubility of chemical compounds in water, and (by extension) in hydrocarbon. The most abundant systems for pH-sensing are based upon either amperometric or potentiometric devices. Potentiometric approaches mainly utilize the glass electrode due to its facile handling and high selectivity towards pH sensing. Ion selective membranes, ion-selective field effect transistors, two terminal microsensors as well as optical and conductometric pH sensing devices have also been developed. However, these types of devices often suffer from instability and/or drift and therefore require constant recalibration. In contrast, amperometric sensors are commonly based upon the pH-switchable permselectivity of membrane or films on the electrode surface. The majority of these systems however, are not suitable for extreme conditions such as measuring pH in oil water mixtures at elevated temperatures and pressures.

The determination of both gaseous hydrogen sulfide and dissolved sulfide anions is of great importance to the field of analytical chemistry in general and in particular to the oilfield industry. This interest is primarily due to the high toxicity of liberated hydrogen sulfide, as it poses a major problem to those who handle and remove sulfide-contaminated products. Details of known sulfide-responsive measurement systems can be found for example in the published international applications WO 01/63094, WO 2004/0011929 and WO 2204/063743.

Recent work as related to the present invention is reflected in the international patent application WO 2005/066618 A1, included herein by reference, and a number of publications by the inventors and others:
- Pandurangappa, M., Lawrence, N.S., Compton, R.G. Analyst 2002, 127, 1568;
- Wildgoose, G.G., Pandurangappa, M., Lawrence, N.S., Jiang, L., Jones, T.G.J., Compton, R.G. Talanta 2003, 60, 887;
- Pandurangappa, M., Lawrence, N.S. , Jiang, L., Jones, T.G.J. , Compton, R.G. Analyst 2003, 128, 473;
- Streeter, I., Leventis, H.C., Wildgoose, G.G. , Pandurangappa, M. , Lawrence, N.S., Jiang, L., Jones, T.G.J., Compton, R.G. J Solid State Electrochem. 2004, 8, 718;
- Leventis, H.C., Streeter, I., Wildgoose, G.G., Lawrence, N.S., Jiang, L., Jones, T.G.J., Compton, R.G. Talanta 2004, 63, 1039; and
- Wildgoose, G.G., Leventis, H.C., Streeter, I., Lawrence, N.S., Wilkins, S.J., Jiang, L., Jones, T.G.J., Compton, R.G. ChemPhysChem 2004, 5, 669.

The known work has focused on the development of a novel solid state probe for pH and other moieties based on the use of two redox chemistries using for example anthraquinone and N,N'-diphenyl-p-phenylenediamine (DPPD). The anthraquinone portion was formed by chemically attaching anthraquinone to carbon powder to form AQcarbon. The AQcarbon was then mixed with insoluble solid DPPD and a suitable reference species nickel hexacyanoferrate, and immobilized on the surface of a basal plane pyrolytic graphite electrode or other carbon-based substrates. A redox sensitive, pH insensitive internal reference is suggested to back-up or replace the actual reference electrode. The system becomes less sensitive to failure of the reference electrode in open hole logging/sampling operations (due to for example fouling by oil, and/or high salinity water) and the internal reference extends the functionality of the sensor device. The possibility of utilizing other redox active pH mediators, and replacing the graphite powder with carbon nanotubes has also been examined.

In general field of organic chemistry it is known to polymerize vinylferrocene by cationic, anionic, free radical polymerization, and more recently by tetramethyl-1-piperidinyloxy(TEMPO)-mediated free radical polymerization. Numerous studies have been reported on the copolymerization of vinylferrocene, using an initiator, azobisisobutyronitrile (AIBN) in organic solvent, with a variety of monomers, such as styrene, methyl methacrylate and isoprene. The copolymerization of vinylferrocene with N,N-diethylacrylamide and the synthesis of the monomers 2-ferrocenylethyl (meth)acrylate and N-2-ferrocenyl (meth)acrylamide, and their corresponding homopolymerizations and copolymerizations with N-isopropylacrylamide was reported for example by Kuramoto, N., Shishido, Y., Nagai, K. J. Polym. Sci., Part A, Polym. Chem. 1997, 35, 1967. and by Yang, Y, Xie, Z, Wu, C Macromolecules 2002, 35, 3426, respectively.

These copolymers showed interesting solution properties with a decrease in the lower critical solution temperature with increasing ferrocene incorporation. In both of these studies, the polymerization conditions, AIBN in toluene at 60 °C, yielded a low incorporation of the organometallic monomer into the copolymers.

The homopolymerization of vinylferrocene and its copolymerization with styrene using TEMPO-mediated free radical polymerization has been reported. Relatively narrow polydispersities were obtained, however, only low poly(vinylferrocene) molecular weights were reported. This deviation from a controlled radical polymerization was attributed to the fact that the vinylferrocene monomer can act as a transfer agent. Consequently, as the fraction of vinylferrocene is increased, the polydispersity increases and finally termination reactions take place and chain growth stops, which in turn decreases the maximum conversion.

Many other copolymers containing ferrocenyl moieties have been prepared, including ferrocene based liquid crystalline polyesters containing phosphorous groups in their backbones; ferrocene containing monomers copolymerized with methyl methacrylate to afford organometallic nonlinear optical polymers; polymethylsiloxane with ferrocenyl groups in its sidechain which was tested as an amperometric glucose sensing electrode.

Mainchain ferrocene polymers have been synthesized by various methods, including polycondensation of I,1'-*bis*(β-aminoethyl)ferrocene with diisocyanates or diacid chlorides, to afford polyureas and polyamides respectively; polyaddition reactions of 1,1'-dimercaptoferrocene with 1,4-butandiyl dimethacrylate; ring-opening metathesis polymerization, and thermal ring-opening polymerization of ferrocenophanes. Star polymers and dendrimers functionalized with ferrocene units have also been synthesized.

There are further publications describing the free radical (co)polymerization of 9-vinylanthracene. However, due to steric hindrance and the formation of stabilized unreactive dibenzylic radicals inhibiting the addition of the next monomer, the polymerization was slow. Yields of up to 43 % were reported for the copolymerization of 9-vinylanthracene with methylmethacrylate, where the copolymers contained 0.12 mol % of 9-vinylanthracene. Zhang et al. Tet. Letts. 2001, 42, 4413-4416 reported the copolymerization of 9-vinylanthracene with ethyleneglycoldimethacrylate using AIBN in THF at 60 ºC for 60 h. They achieved high copolymer yields (92 %) with an 85 % conversion of 9-vinylanthracene (5.33 mol % by elemental analysis).

Elsewhere the synthesis of poly(n-butyl methacrylate-co-styrene-co-9-vinylanthracene) by semi-continuous emulsion copolymerization has been reported. These copolymers had high conversion (> 96 %), but as they were using the anthracene as a fluorescent label for the study of polymer blends, they only incorporated 0.1 mol % of 9-vinylanthracene. Anthracene containing polyamides were prepared using Diels-Alder and retro-Diels-Alder chemistry, via processable/soluble precursor copolymers. The resulting polyamides were insoluble in organic solvents.

General downhole measurement tools for oilfield applications are known as such. Examples of such tools are found in the cited International Patent Application WO-2005/066618 A1 and the prior art referred to therein.

In the light of the above, it is an object of the present invention to improve methods and apparatus as described in WO-2005/066618 A1. More specifically, it is an object of the present invention to provide sensors for electro-chemical measurements of pH with enhanced robustness for use in a downhole environment.

### SUMMARY OF THE INVENTION

The invention achieves its objects by providing an electro-chemical pH sensor comprising an organic copolymer of a monomer comprising a redox system having a peak redox reaction potential which is sensitive to pH (i.e. proton concentration) and a second monomer comprising another redox system with a different structure to the first redox system and having a peak redox reaction potential which is essentially insensitive to pH. Thus, the redox systems are covalently bound to an organic polymer to increase their stability in a high-temperature environment. The temperatures in such an environment may exceed 50 degrees Celsius or even 70 degrees Celsius.

The invention combines the detecting redox system with a reference redox system in one polymeric molecule.

In a preferred variant of the invention one redox system is based on anthracenes and derivatives thereof and the second is based on ferrocenes and derivatives thereof. Other possible examples include phenylene diamines, catachols, quinones, phenothiazinium dyes as pH active compounds and mettalocenes, tetrasubstituted phenylene diamines as pH inactive or reference redox systems.

It should be noted that the term polymer is defined for the purpose of this invention as excluding pure or almost pure carbon such as graphite, diamond, fullerenes and nanotubes as such or in a surface-modified form. Whilst these carbon compounds may be used as substrate for the polymers of this invention, organic polymers are herein defined as macromolecular compounds with a linked chain or rings of carbon atoms arranged as a linear or branched macromolecule.

An electro-chemical technique using a sensor in accordance with the present invention can be applied for example as part of a production logging tool or an open hole formation tester tool (such as the Modular Dynamic Tester, MDT™). In the latter case, the technique can provide a downhole real-time water sample validation or downhole pH measurement which in turn can be used for predicting mineral scale and corrosion assessment.

The invention in its most preferred embodiments has the advantage of using a single polymeric species as active component of the electrode. It was found that this decreases any instability in the electrode performance due to leaching of the species from the electrode surface or other temperature or age-related effects. Furthermore the results can be shown to be in good agreement with those theoretically predicted by the Nernst equation and the use of the internal reference electrode means the sensor can be used without a temperature calibration.

Apart from their use for the specific purpose described above, the polymeric compounds of this invention are also believed to be novel as such.

These and other features of the invention, preferred embodiments and variants thereof, possible applications and advantages will become appreciated and understood by those skilled in the art from the following detailed description and drawings.

### BRIEF DESCRIPTION OF DRAWINGS

- FIG. 1: shows the basic (co-)polymerization reaction;
- FIG. 2: shows proposed electrochemical pathways for, the anthracene (2A) and, the ferrocene moieties (2B), respectively;
- FIG. 3: shows the oxidative (3A) and reductive (3B) square wave voltammetric response obtained with a copolymer-according to an example of the invention, p(VA-co-VF), immobilized on a BPPG electrode at various pH values (a = 9.1, b = 6.9, c =4.0;
- FIG. 4A: shows the square wave voltammetric responses for various weight-to-weight ratios of vinylanthracene and vinylferrocene used in the copolymerization (a = 80:20, b = 60:40, c = 40:60, d = 20:80);
- FIG. 4B: is a plot of the peak current ratios (vinylferrocene / vinylanthracene) against the theoretical weight percent of vinylanthracene;
- FIG. 5: illustrates the oxidative (5A) and reductive.(5B) square wave voltammetric response obtained for the p(VA-co-VF) copolymer derivatized carbon immobilized on a BPPG electrode at various pH's (a = 9.1, b = 6.9, c =4.0) as well as the cyclic voltammetric response of p(VA-co-VFc) when immobilised on a BPPG electrode (100 mVs⁻¹) towards increasing additions of quanta of 200 µM sulfide (FIG. 5C) and the square wave voltammetric response of p(VA-co-VFc) when immobilised on a BPPG electrode (at pH 6.9) in the presence and absence of 2 mM sulfide (FIG 5D);
- FIG. 6: illustrates variation in the ferrocene peak current for both the copolymer and pure ferrocene as a function of time at 70 °C;
- FIG. 7A: is a perspective view, partially cut-away, of a sensor in accordance with an example of the present invention in a downhole tool;
- FIG. 7B: illustrates the geometrical surface layout of the electrode of FIG. 7A;
- FIG. 8: illustrates an example of a sensor in accordance with the invention as part of a wireline formation testing apparatus in a wellbore;
- FIG. 9: shows a wellbore and the lower part of a drill string including the bottom-hole-assembly, with a sensor in accordance with the invention; and
- FIG. 10: shows a sensor in accordance with the invention located downstream of a venturi-type flowmeter.

### DETAILED DESCRIPTION OF THE INVENTION

The methods and apparatus of the present invention are based on the measurement of the electromotive force (e.m.f.) or potential E in a potentiometric cell which includes measuring and reference electrodes (half-cells). The theory of voltammetry and its application to measurements are both well developed and reference is again made to WO-2005/066618 A1 for further details.

The present invention is considered an improvement over WO-2005/066618 in that the redox system are linked to a polymeric compound. This is found to stabilize the molecules and hence increase the performance of sensors as described in WO-2005/066618.

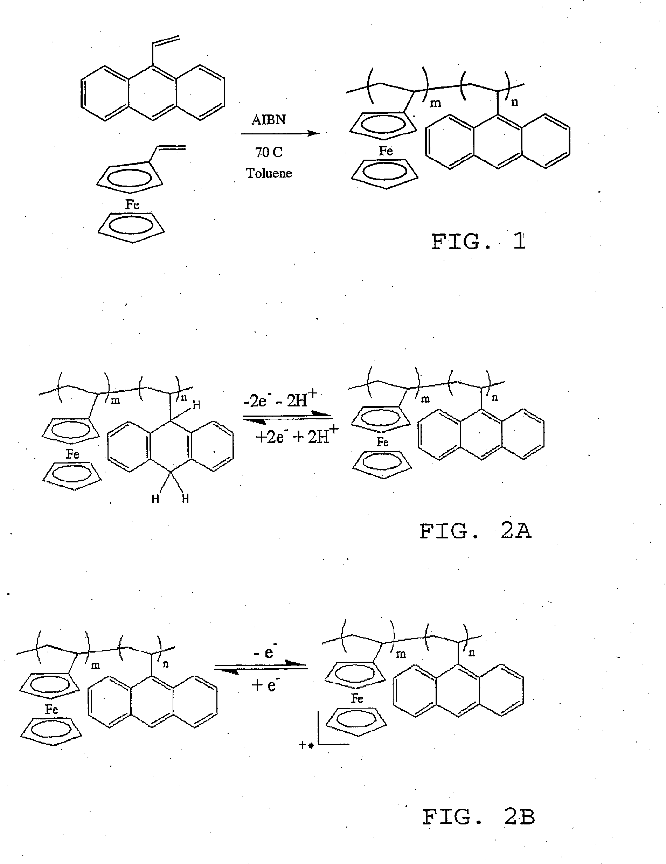

Describing first the preparation of an example compound in accordance with the invention, FIG. 1 illustrates monomer units (left side) and a polymerization reaction to synthesize a vinylanthracene and vinylferrocene co-polymer as shown on the right side. The reaction conditions for the free radical copolymerizations used are: Dissolving the required amount of monomer(s) (typically 500 mg) in toluene (5 mL) and degassing by three freeze-thaw cycles. After placing the solution in constant temperature oil baths at 70 ºC adding the initiator, azobisisobutyronitrile (AIBN, 50 mg), Stirring for 48 h under an inert atmosphere. After completion of the polymerizations precipitating the toluene solutions into rapidly stirred methanol three times, and then drying under vacuum.

The redox reactions of the two redox systems of the resulting co-polymer poly(vinylanthracene-co-vinylferrocene) (abbreviated referred to herein as p(VA-co-VF)) are shown in FIG. 2. For a sulfide ion the reactions can be written as

Fe→ Fe^{+●} + e⁻

Fc^{+●} + HS⁻ ⇄ Fc + S + H +

Electrochemical measurements were recorded using an µAutolab II potentiostat (Ecochemie, Netherlands) with a standard three-electrode configuration. A platinum wire (1 mm diameter, Goodfellows) provided the counter electrode and a saturated calomel electrode (Radiometer, Copenhagen) acted as the reference. A basal plane pyrolytic graphite (BPPG) acted as the working electrode. All square wave voltammetric experiments were conducted using the following parameters: frequency = 25 Hz, step potential = 2 mV, amplitude =20 mV. All experiments, involving elevated temperatures up to 100 °C, were conducted on a bench-top compressor oil flow loop with a thermocouple in each cell.

For use as a downhole sensor the equipment described above has to be replaced by smaller, more specialized mechanical and electronic systems as are known per se, for example as part of the MDT tool technology.

All electrochemical studies were conducted by abrasively immobilizing the compound of interest onto the surface of a BPPG electrode prior to experiments being performed. This was done by initially polishing the electrode on glass polishing paper (H00/240) after which they it was polished on silicon carbide paper (P1000C) for smoothness. The compounds were then abrasively immobilized onto the BPPG electrode by gently rubbing the electrode surface on a fine filter paper containing either material. All electrochemical measurements were conducted at 23°C unless otherwise stated.

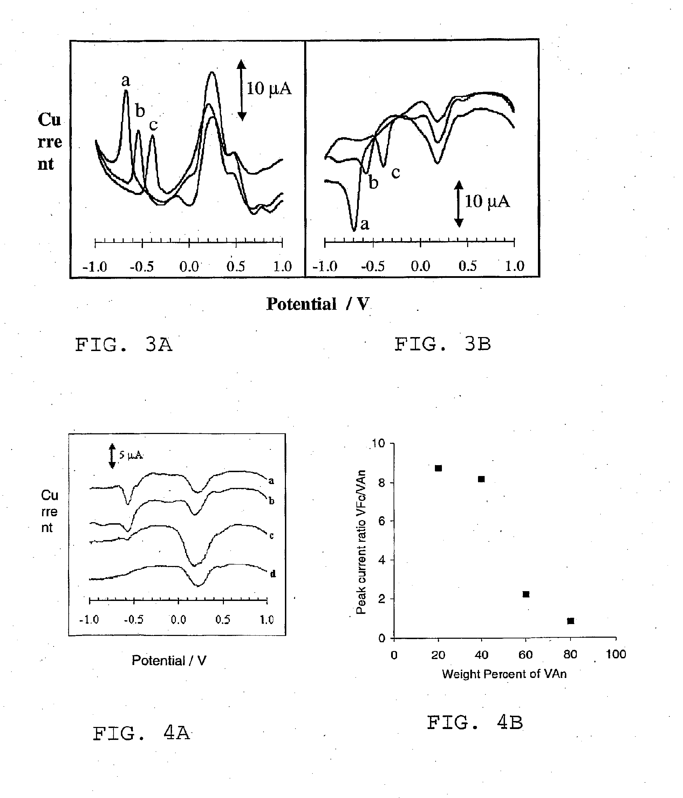

In FIG. 3 the voltammetric response is shown of the poly(vinylanthracene-co-vinylferrocene) copolymer formed when the monomers were reacted in a 60:40 vinylanthracene vinylferrocene) weight-to-weight ratio.

The plots detail the square wave voltammograms for both the oxidation (FIG. 3A) and reduction (FIG. 3B) of p(VA-co-VF) at various pH values ((a) 9.1, (b) 6.9, (c) 4.0). Analysis of the oxidative wave (FIG. 3A) at pH 9.1 (response a) shows the presence of four distinct oxidative processes at (-0.67 V, +0.22 V, +0.48 V and +0.80 V). The first at -0.67 V was found to be pH sensitive, with the oxidative wave shifting to more positive potentials as the pH was decreased (responses b and c). The latter three waves were all found to be pH insensitive.

FIG. 3B displays the response obtained when the potential was swept from +1.0 v to -1.0 V. Two reduction waves at +0.16 V and -0.69 V at pH 9 (response a) are observed. The wave at a potential of -0.69 V was found to shift with pH, whilst the wave at +0.16 V was insensitive to changes in the pH. A plot of the variation in peak potential as function of pH for the wave at -0.69 V (pH 9, response a) produced a linear response with a gradient of 59.9 mV/pH unit, consistent with an n electron and n proton electrochemically reversible reaction, where n is likely to be 2, (FIG. 2). This can therefore be attributed to the reduction of the anthracene moiety of the co-polymer. The corresponding oxidation was observed at -0.67 V (pH 9), see FIG. 3A, response a. The three oxidative waves observed at +0.22 V, +0.48 V and +0.80 V can be attributed to the presence of the ferrocene moiety of the copolymer. These results demonstrate the first redox active.copolymer capable of measuring pH with its own independent reference compound.

The electrochemical response of the copolymer can be modified or optimized by varying the ratios of vinylferrocene to vinylanthracene within the polymerization process. FIG. 4A details the reductive square wave voltammetric response for copolymers prepared with various vinylanthracene:vinylferrocene monomer ratios. As the vinylanthracene concentration was lowered, the peak current observed at -0.67 V decreased with respect to the vinylferrocene wave at +0.16 V. A plot of the peak ratios against vinylanthracene theoretical weight percent as shown in FIG. 4B confirms this observation.

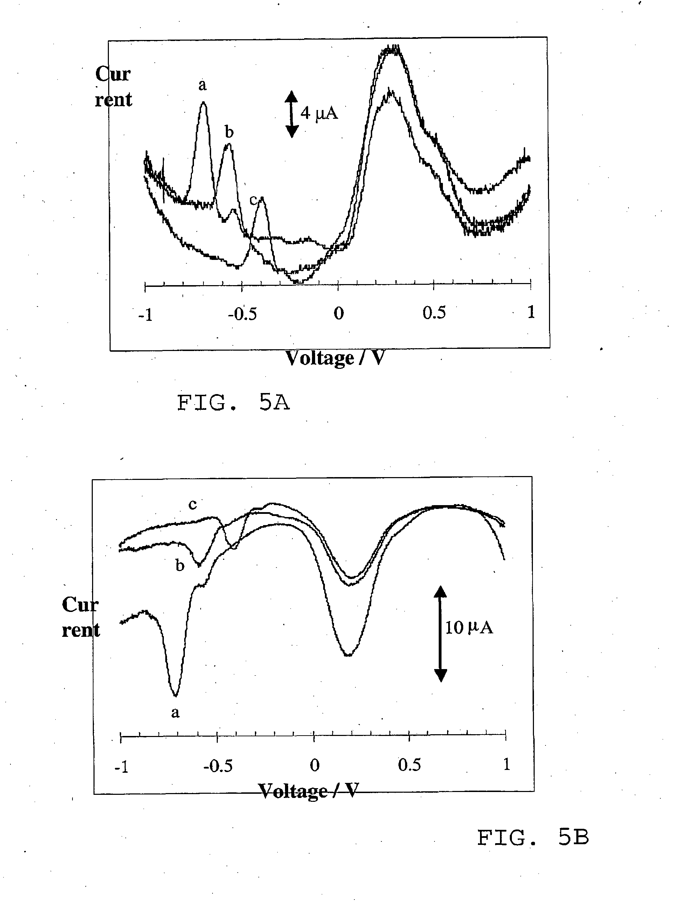

In a further embodiment of the invention the synthesis can be conducted in the presence of graphite particles, in order to induce the derivatization of the graphite. ESEM and EDAX data strongly suggests that the polymer is formed upon the carbon particles due to the presence of Fe within the carbon polymer sample. This evidence is supported by the data detailed in FIGs. 5A and 5B. These figures show the square wave voltammetric response of P(Vac-co-Fc) derivatized carbon immobilized onto the surface of the bppg electrode, at various pH values (a = pH 9, b = pH 7, c = pH 4). A comparison of this data to the results detailed in FIG. 3, shows a clear similarity between the two sets of data. The oxidative scan (FIG. 5A) shows the presence of two oxidative waves corresponding to the oxidation of the vinylanthracene and vinylferrocene moieties at -0.67 V and +0.22 V (pH 9, response a) respectively. The corresponding reduction wave is detailed in FIG. 5B.

The results demonstrate the possibility of homogenously derivatizing the carbon surface with the polymer. It is expected that using either this methods or methods described in WO 2005/066618 A1 and variations thereof can be used to immobilize the polymers to a broad variety of carbon-based substrates, include graphite, diamond layers or nanotubes.

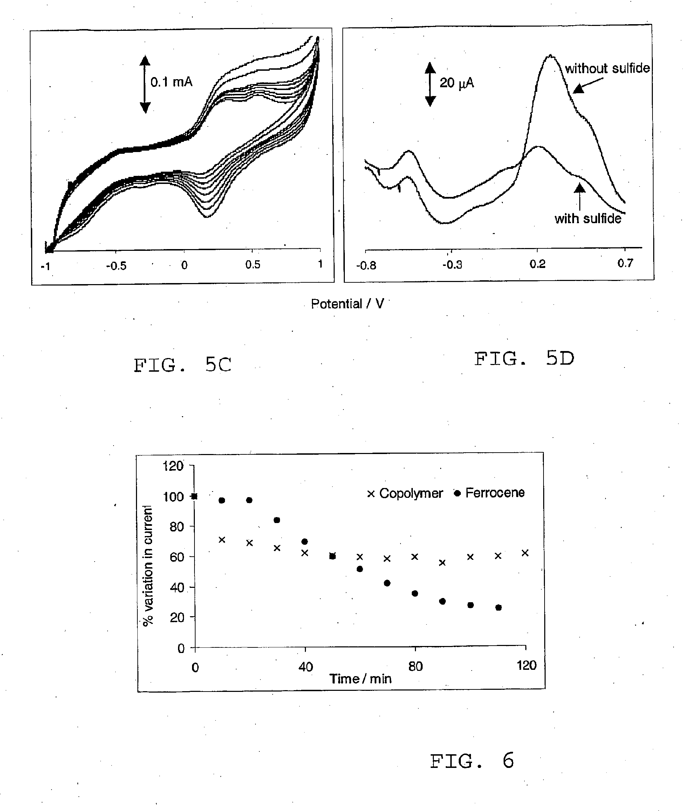

In FIG. 5C details are shown of the cyclic voltammetric response (50 mVs⁻¹) of p(VA-co-VF) towards increasing addition of sulfide at pH 6.9. In the absence of sulfide a response analogous to that described above was observed, with three oxidative waves at -0.45 V, +0.38 V and +0.60 V along with two reductive waves at +0.10 V and -0.77 V. Upon the addition of sulfide (200 µM) to the phosphate buffer solution, an increase in the oxidative peak current is observed at +0.38 V, along with a corresponding decrease at +0.10 V, analogous to that observed for p(VFc). Furthermore, analysis of the redox wave of the anthracene moiety of the copolymer reveals no variation in the presence and absence of sulfide, consistent with the data obtained for vinylanthracene.

As a dual pH/sulfide sensor, the electrode is capable of measuring the pH changes both in the absence and presence of sulfide. The pH of a solution is obtained by measuring the potential difference between the anthracene and ferrocene waves with square wave voltammetry. The ferrocene wave acts as the reference species (pH inactive), whilst the anthracene follows a Nernstian response with pH. FIG. 5D details the square wave response of the copolymer in the presence (dashed line) and absence (solid line) of 2 mM sulfide. Without sulfide, two well defined oxidative waves were observed at-0.53 V and +0.29 V, with a shoulder observed at +0.49 V. These are consistent with the two electron, two proton oxidation of anthracene and the one electron oxidation of ferrocene. In the presence of sulfide, all the oxidative features were observed.

The effect of temperature upon the pH sensing capabilities of the redox active polymer is shown in FIG. 6. In order to verify that the copolymer produces a highly stable response over a period of time, its square wave voltammetric response when immobilized upon a BPPG electrode was compared to that of monomeric ferrocene over a period of 2 hours at 70 °C. The percentage decrease in the ferrocene wave was then calculated for each species. FIG. 6 details the plot of percentage decrease as a function of time for both systems. Although the copolymer shows a decrease in the first 20 mins, the response thereafter appeared to be stable over the remaining time period. In contrast, the ferrocene monomer is stable initially, however the signal decreased by 80 % over the 2 hour period. These results demonstrate the superior stability of the polymeric based sensor.

It can be expected that this advantage extends at least partially to a sensor where the two redox systems are bound to two different polymers or where two active redox systems as described in WO 2005/066618 and a inactive reference redox system are bound to one polymer. Such as system however is likely to be less preferable than the one described above as it requires the handling of two different polymer chemistries at the preparation stage of the electro-chemical sensor.

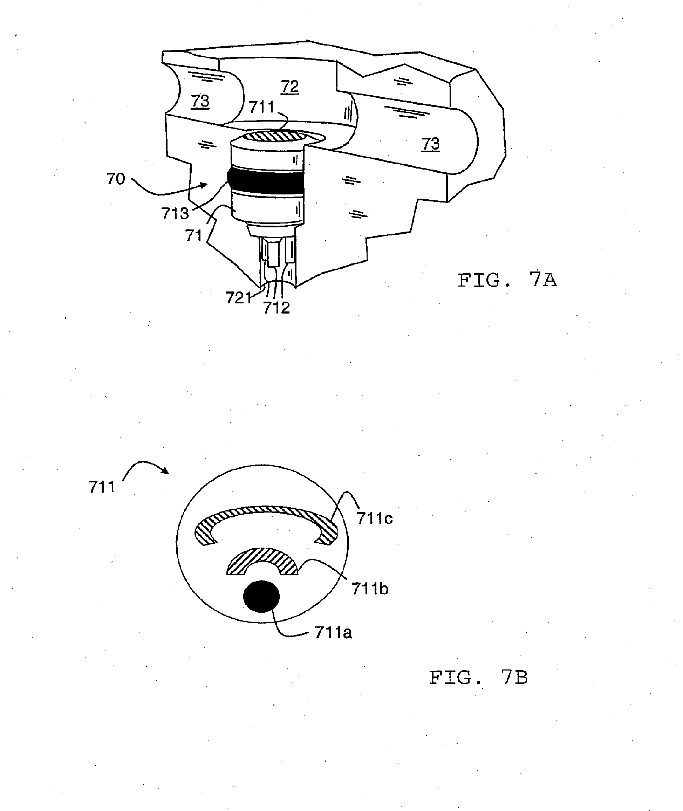

A schematic of an electro-chemical microsensor 70 incorporating an electrode prepared in accordance with the procedures described above is shown in FIG. 7. The body 71 of the sensor is fixed into the end section of an opening 72. The body carries the electrode surface 711 and contacts 712 that provide connection points to voltage supply (not shown) and dectector (not shown) through a small channel 721 at the bottom of the opening 72. A sealing ring 713 protects the contact points and electronics from the wellbore fluid that passes under operation conditions through the sample channel **73.**

A possible electrode pattern **711** is shown in FIG. 7B, with a working electrode **711a,** an external reference electrode **711b** and a counter-electrode **711c.** The polymers of this invention can be deposited as working electrode **711a.**

It is further feasible to use the methods presented herein to develop copolymers with two measuring or indicator electrodes or molecules measuring two e.m.f or potentials with reference to the same reference electrode and being sensitive to the same species or molecule in the environment as suggested in the cited international application WO 2005/066618 A1. As a result such a polymer is likely to exhibit the same increase in the sensitivity towards a shift in the concentration as the separate molecules.

The novel probe may be placed inside various wellbore tools and installations as described in the following examples.

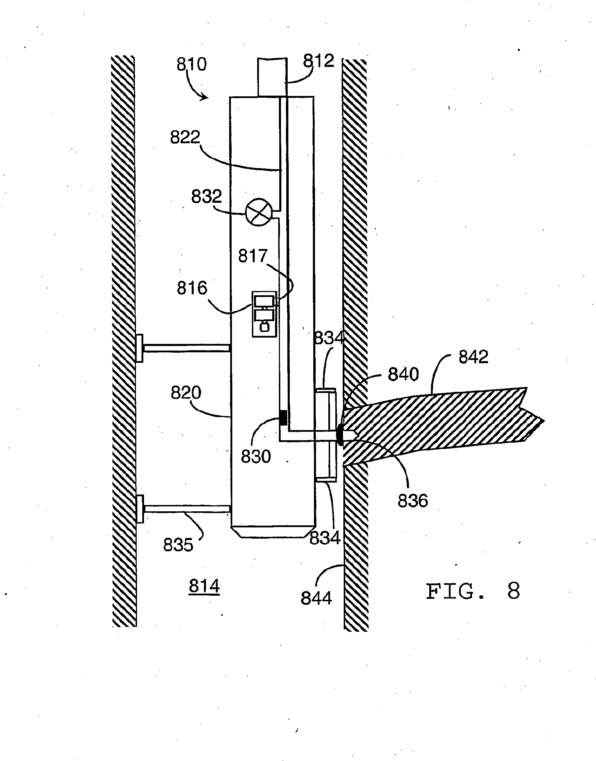

In FIGs. 8-11 the sensor is shown in various possible downhole applications.

In FIG. 8, there is shown a formation testing apparatus **810** held on a wireline **812** within a wellbore **814**. The apparatus **810** is a well- known modular dynamic tester (MDT, Mark of Schlumberger) as described in the co-owned U.S. Pat. No. 3,859,851 to Urbanosky U.S. Pat. No. 3,780,575 to Urbanosky and Pat. No. 4,994,671 to Safinya et al., with the known tester being modified by introduction of an electro-chemical analyzing sensor **816** as described in detail above (FIG. 7). The modular dynamics tester comprises body **820** approximately 30m long and containing a main flowline bus or conduit **822.**

The analysing tool **816** communicates with the flowline **822** via opening **817.** In addition to the novel sensor system **816,** the testing apparatus comprises an optical fluid analyser **830** within the lower part of the flowline **822.** The flow through the flowline **822** is driven by means of a pump **832** located towards the upper end of the flowline **822.** Hydraulic arms **834** and counterarms **835** are attached external to the body **820** and carry a sample probe tip **836** for sampling fluid. The base of the probing tip **836** is isolated from the wellbore **814** by an o-ring **840,** or other sealing devices, e.g. packers.

Before completion of a well, the modular dynamics tester is lowered into the well on the wireline **812.** After reaching a target depth, i.e., the layer **842** of the formation which is to be sampled, the hydraulic arms **834** are extended to engage the sample probe tip **836** with the formation. The o-ring **840** at the base of the sample probe **836** forms a seal between the side of the wellbore **844** and the formation **842** into which the probe **836** is inserted and prevents the sample probe **136** from acquiring fluid directly from the borehole **814.**

Once the sample probe **836** is inserted into the formation **842,** an electrical signal is passed down the wireline **812** from the surface so as to start the pump **832** and the sensor systems **816** and **830** to begin sampling of a sample of fluid from the formation **842.** The electro-chemical detector **816** is adapted to measure the pH and ion-content of the formation effluent.

A bottle (not shown) within the MDT tool may be filled initially with a calibration solution to ensure in-situ (downhole) calibration of sensors. The MDT module may also contain a tank with a greater volume of calibration solution and/or of cleaning solution which may periodically be pumped through the sensor volume for cleaning and re-calibration purposes.

Electro-chemical probes in an MDT-type downhole tool may be used for the absolute measurements of downhole parameters which significantly differ from those measured in samples on the surface (such as pH, Eh, dissolved H₂S, CO₂). This correction of surface values are important for water chemistry model validation.

A further possible application of the novel sensor and separation system is in the field of measurement-while-drilling (MWD). The principle of MWD measurements is known and disclosed in a vast amount of literature, including for example United States Patent No. 5,445,228, entitled "Method and apparatus for formation sampling during the drilling of a hydrocarbon well".

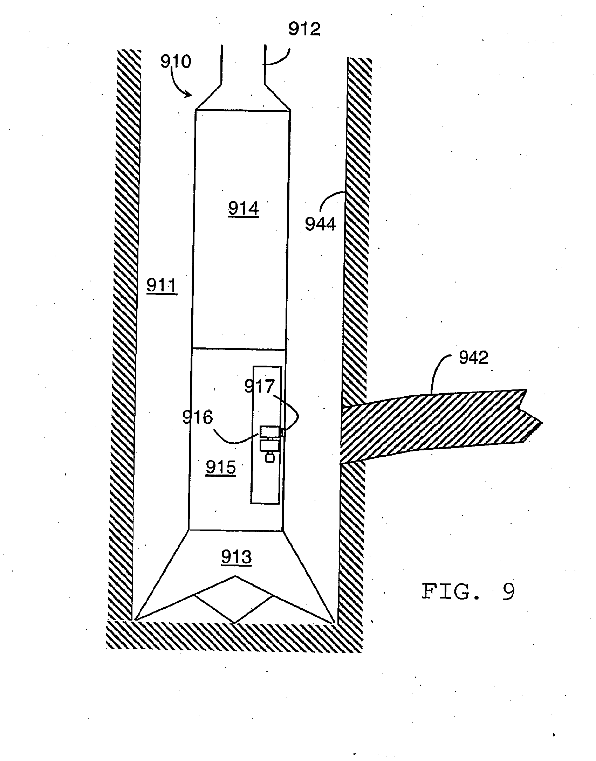

In FIG. 9, there is shown a wellbore **911** and the lower part of a drill string **912** including the bottom-hole-assembly (BHA) **910.** The BHA carries at its apex the drill bit **913.** It includes further drill collars that are used to mount additional equipment such as a telemetry sub **914** and a sensor sub **915.** The telemetry sub provides a telemetry link to the surface, for example via mud-pulse telemetry. The sensor sub includes the novel electro-chemical analyzing unit **916** as described above. The analyzing unit **916** collects fluids from the wellbore via a small recess **917** protected from debris and other particles by a metal mesh.

During drilling operation wellbore fluid enters the recess **917** and is subsequently analyzed using sensor unit **916.** The results are transmitted from the data acquisition unit to the telemetry unit **914,** converted into telemetry signals and transmitted to the surface.

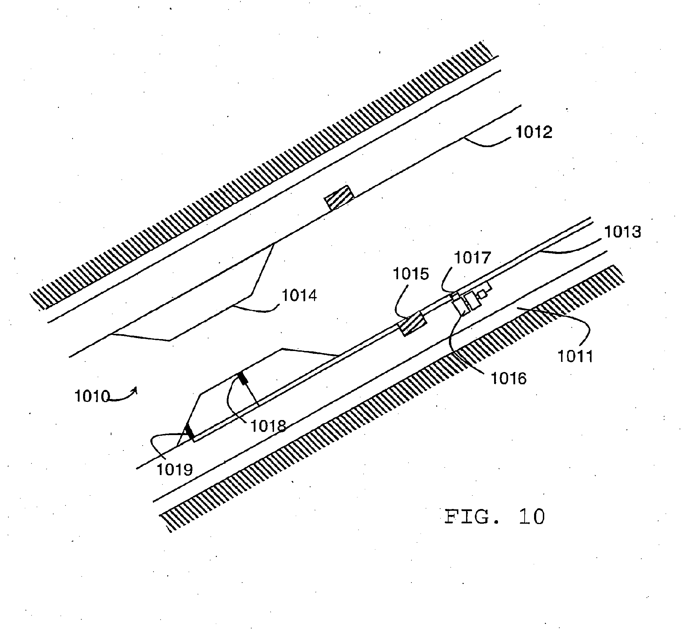

A third application is illustrated in FIG. 10. It shows a Venturi-type flowmeter **1010,** as well known in the industry and described for example in the United States Patent No. 5,736,650. Mounted on production tubing or casing **1012,** the flowmeter is installed at a location within the well **1011** with a wired connection **1013** to the surface following known procedures as disclosed for example in the United States Patent No. 5,829,520.

The flowmeter consists essentially of a constriction or throat **1014** and two pressure taps **1018, 1019** located conventionally at the entrance and the position of maximum constriction, respectively. Usually the Venturi flowmeter is combined with a densiometer **1015** located further up- or downstream.

The novel electro-chemical analyzing unit **1016** is preferably located downstream from the Venturi to take advantage of the mixing effect the Venturi has on the flow. A recess **1017** protected by a metal mesh provides an inlet to the unit.

During production wellbore fluid enters the recess **1017** and is subsequently analyzed using sensor unit **1016.** The results are transmitted from the data acquisition unit to the surface via wires **1013.**

Various embodiments and applications of the invention have been described. The descriptions are intended to be illustrative of the present invention. It will be apparent to those skilled in the art that modifications may be made to the invention as described without departing from the scope of the claims set out below.

## Claims

1. An electro-chemical pH sensor comprising an organic copolymer of a monomer comprising a redox system having a peak redox reaction potential which is sensitive to pH and a second monomer comprising another redox system with a different structure to the first redox system and having a peak redox reaction potential which is essentially insensitive to pH.

2. The sensor of claim 1 wherein the redox systems have peak redox reaction at different voltages.

3. The sensor of claim 1 or claim 2 wherein the sensitive redox system comprises an anthracene, phenylene diamine, catechol, quinone or phenothiazinium dye and the insensitive redox system comprises a metallocene or tetrasubstituted phenylene diamine.

4. The sensor of claim 3 wherein the insensitive redox system comprises ferrocene.

5. The sensor of claim 4 which is a copolymer of vinyl anthracene and vinyl ferrocene.

6. The sensor of any one of claims 1 to 4 wherein the copolymer is mounted onto a conductive substrate.

7. The sensor of claim 6 wherein the substrate is carbon-based.

8. The sensor of any one of the preceding claims comprising a detector to measure the redox potentials of the redox systems in the presence of an aqueous solution and to convert measurements into a signal indicative of the pH of the solution.

9. A downhole tool for measuring characteristic parameters of wellbore effluents comprising an electro-chemical sensor in accordance with any one of the preceding claims.

10. A downhole formation sampling tool for measuring characteristic parameters of wellbore effluents comprising an electro-chemical sensor in accordance with any one of claims 1 to 8.

11. A downhole tool for measuring characteristic parameters of wellbore effluents comprising an electro-chemical sensor in accordance with any one of claims 1 to 8 mounted onto a permanently installed part of the wellbore.

## Patentansprüche

1. Elektrochemischer pH-Sensor, umfassend ein organisches Copolymer von einem Monomer, das ein Redoxsystem mit einem Spitzen-Redoxreaktionspotenzial umfasst, welches pH-empfindlich ist, und einem zweiten Monomer, das ein weiteres Redoxsystem umfasst, mit einer von dem ersten Redoxsystem verschiedenen Struktur, und das ein Spitzen-Redoxreaktionspotenzial hat, welches weitgehend pH-unempfindlich ist.

2. Sensor nach Anspruch 1, wobei die Redoxsysteme eine Spitzen-Redoxreaktion bei verschiedenen Spannungen haben.

3. Sensor nach Anspruch 1 oder Anspruch 2, wobei das empfindliche System einen Anthracen-, Phenylendiamin-, Brenzcatechin-, Chinon- oder Phenothiazin-Farbstoff und das unempfindliche Redoxsystem ein Metallocen oder ein vierfach substituiertes Phenylendiamin umfasst.

4. Sensor nach Anspruch 3, wobei das unempfindliche Redoxsystem Ferrocen umfasst.

5. Sensor nach Anspruch 4, der ein Copolymer von Vinylanthracen und Vinylferrocen ist.

6. Sensor nach einem der Ansprüche 1 bis 4, wobei das Copolymer auf einem leitfähigen Substrat aufgebracht ist.

7. Sensor nach Anspruch 6, wobei das Substrat kohlenstoffbasiert ist.

8. Sensor nach einem der vorhergehenden Ansprüche, der einen Detektor umfasst, um die Redoxpotenziale der Redoxsysteme in Gegenwart einer wässrigen Lösung zu messen und um Messwerte in ein den pH-Wert der Lösung anzeigendes Signal umzuwandeln.

9. Bohrlochwerkzeug zum Messen charakteristischer Parameter von Bohrlochabwässern, das einen elektrochemischen Sensor gemäß einem der vorhergehenden Ansprüche umfasst.

10. Bohrlochwerkzeug zur Formationsprobennahme zum Messen charakteristischer Parameter von Bohrlochabwässern, das einen elektrochemischen Sensor gemäß einem der Ansprüche 1 bis 8 umfasst.

11. Bohrlochwerkzeug zum Messen charakteristischer Parameter von Bohrlochabwässern, das einen elektrochemischen Sensor gemäß einem der Ansprüche 1 bis 8 umfasst, der an einem dauerhaft eingebauten Teil des Bohrlochs angebracht ist.

## Revendications

1. Capteur électrochimique de pH comprenant un copolymère organique d'un monomère comprenant un système redox ayant un potentiel maximal de réaction redox qui est sensible au pH et un second monomère comprenant un autre système redox ayant une structure différente de celle du premier système redox et ayant un potentiel maximal de réaction redox qui est sensiblement insensible au pH.

2. Capteur selon la revendication 1, dans lequel les systèmes redox ont une réaction redox maximale à des tensions différentes.

3. Capteur selon la revendication 1 ou la revendication 2, dans lequel le système redox sensible comprend un colorant anthracène, phénylène diamine, catéchol, quinone ou phénothiazinium et le système redox insensible comprend un métallocène ou une phénylène diamine tétrasubstituée.

4. Capteur selon la revendication 3, dans lequel le système redox insensible comprend du ferrocène.

5. Capteur selon la revendication 4, qui est un copolymère de vinyl anthracène et de vinyl ferrocène.

6. Capteur selon l'une quelconque des revendications 1 à 4, dans lequel le copolymère est monté sur un substrat conducteur.

7. Capteur selon la revendication 6, dans lequel le substrat est à base de carbone.

8. Capteur selon l'une quelconque des revendications précédentes, comprenant un détecteur pour mesurer les potentiels redox des systèmes redox en présence d'une solution aqueuse et pour convertir les mesures en un signal indicatif du pH de la solution.

9. Outil de fond pour mesurer des paramètres caractéristiques d'effluents de puits de forage, comprenant un capteur électrochimique selon l'une quelconque des revendications précédentes.

10. Outil d'échantillonnage de formation de fond pour mesurer des paramètres caractéristiques d'effluents de puits de forage, comprenant un capteur électrochimique selon l'une quelconque des revendications 1 à 8.

11. Outil de fond pour mesurer des paramètres caractéristiques d'effluents de puits de forage, comprenant un capteur électrochimique selon l'une quelconque des revendications 1 à 8 monté sur une partie du puits de forage installée de façon fixe.
